# EUROPEAN PATENT APPLICATION

(11) **EP 0 795 917 A2**
(43) Date of publication of application: **17.09.1997**
(21) Application number: 97301444.2
(22) Date of filing: 04.03.1997
(51) Int. Cl.: H01M 4/73

(54) **Lead-acid battery with corrosion resistant electrode structure, and method of making same**

(30) Priority: 12.03.1996 US 614424
(71) Applicant: LUCENT TECHNOLOGIES INC., Murray Hill, New Jersey 07974-0636 (US)
(72) Inventor: Jin, Sungho, Millington, New Jersey 07946 (US); Vyas, Brijesh, Warren, New Jersey 07059 (US)
(74) Representative: Johnston, Kenneth Graham

(57) **Abstract**

The disclosed article (typically a lead-acid battery) comprises a lead-containing member (20) (typically an electrode grid structure). The member comprises a lead-containing core member (10) that is surrounded by a lead coating (11) bonded to the core member. The core member typically consists of relatively high-strength lead-containing material, e.g., a lead alloy such as precipitation-hardened Pb-Ca-Sn, or dispersoid-containing lead. The lead coating has an average grain size that is at least 4 times the average grain size of the core member. The described member (e.g., electrode grid structure for use in a lead-acid battery) can have relatively high corrosion resistance and relatively low weight.

## Description

### Field of the Invention

This invention pertains to the field of lead-acid batteries, more specifically, to electrode grid structures for such batteries, and to methods of making the structures.

### Background of the Invention

The technology of lead-acid storage batteries is now quite mature. However, despite a great deal of work done towards improving such batteries, there still exist problems. For instance, it is known that pure Pb is relatively corrosion resistant under the conditions that exist in the battery, and thus pure Pb grid electrode structures are widely used. However, pure Pb is soft and mechanically weak, necessitating use of relatively massive electrode grid structures. Consequently, lead-acid batteries with pure Pb electrode grid structures typically have relatively low value of stored energy per unit weight.

By way of further example, it is known that lead alloys can have substantially greater strength than pure lead, and lead-acid batteries with lead alloy (e.g., precipitation hardened Pb-Ca-Sn) electrode grid structures are also widely used. These batteries typically have a higher value of stored energy per unit weight, compared to the above discussed battery type. However, the lead alloy electrode structures typically have relatively low corrosion resistance, and batteries that comprise lead alloy electrode structures consequently typically have relatively short life time.

In view of the great importance of lead-acid storage batteries, it would be highly desirable to have available a battery that comprises a relatively light weight electrode grid structure that also is relatively resistant to corrosion under the conditions that exist in the battery during normal operations, and thus could combine a relatively high value of stored energy per unit weight with relatively good corrosion resistance. This application discloses such a battery, and a method of making the battery.

### Summary of the Invention

The invention is defined by the claims. It is embodied in an article (typically a lead-acid battery) comprising a Pb-containing member (typically an electrode grid structure). Significantly, the member comprises a Pb-containing core member of relatively high mechanical strength (e.g., dispersion-hardened lead), the core member being substantially surrounded by a Pb coating bonded to the core member. The Pb coating has an average grain size that is at least four times larger than the average grain size of the core member.

It will be appreciated that the core member provides mechanical strength, whereas the large grain-size Pb coating provides corrosion resistance to the body. The core member can be made of conventional lead alloys (e.g., Pb-Ca-Sn) or it can be made of, for instance, the dispersoid-containing lead disclosed in the above-referenced co-assigned patent application.

A further embodiment of the invention is a method of making the above article. The method comprises providing a Pb-containing core member that is substantially surrounded by a Pb-coating that is bonded to the core member, heat treating the coated core member such that the Pb-coating attains an average grain size that is at least four times larger than an average grain size of the core member. Subsequent to the heat treatment one or more further steps are carried out towards completion of the article. These steps can be conventional, and exemplarily include loading the electrode grid structure with active powder, provision of a battery housing, placement of the loaded electrode structure into the housing, provision of electrical contacts, and filling the battery with electrolyte.

By "grain size" of a given crystallite we mean herein the diameter of a circle of equal area as the given crystallite. Those skilled in the art know techniques for determining the average grain size of a material. The average grain size of the coating material herein is the average grain size at the surface of the coating. This is of operational significance since this average grain size determines the length of grain boundaries exposed to the corrosive electrolyte. By "substantially insoluble" in a given medium we mean herein a solid or liquid solubility less than 0.5 atomic percent, preferably less than 0.1 atomic %.

### Brief Description of the Drawings

FIGs. 1-4 schematically illustrate exemplary techniques for formation of the lead-coated dispersion-hardened core member;
FIG. 5 schematically depicts a portion of an electrode grid structure according to the invention;
FIG. 6 schematically shows an exemplary technique of forming an electrode grid structure according to the invention; and
FIG. 7 shows a micrograph of Pb-coated core material.

### Detailed Description Of Some Exemplary Preferred Embodiments

The (mechanically relatively strong) core member material can be produced by any appropriate process. For instance, the material can be a lead alloy of the type conventionally used for lead acid battery electrode grid structures. Among them are Pb-Ca, Pb-Ca-Sn, Pb-Sb, Pb-Sb-Sn, Pb-Sn and Pb-Sb-Cu. See, for instance, N. E. Bagshaw, Journal of Power Sources, Vol. 53, pp. 25-30 (1995).

Alternatively, it could be dispersoid-containing lead as disclosed in the above-referenced co-assigned patent application. Broadly speaking, these dispersoids are selected from the inorganic materials that are substantially insoluble in Pb and in sulfuric acid, both at a temperature in the temperature range that is conventional for operation of lead-acid batteries (e.g., -20 to 70°C), and the sulfuric acid of concentration in the concentration range that is conventional for operation of lead-acid batteries (e.g., 15-45% by weight). Exemplarily, the dispersoids are substantially insoluble in Pb at 70°C, and in 45% by weight sulfuric acid at 70°C. More specifically, the dispersoid typically is selected from oxides, nitrides and carbides that have the above-recited properties. Exemplarily, the dispersoid is selected from the group consisting of TiO₂, ZrO₂, Al₂O₃, PbSnO₃, PbTiO₃, BaPbO₃, TiN, Zrn, AlN, TiC, ZrC, HfC, and the rare earth oxides, nitrides and carbides. Techniques for forming the dispersoid-containing Pb are disclosed in detail in the above-referenced concurrently filed patent application and will not be further discussed herein.

Indeed, the core member material need, at least in principle, not be a Pb-containing material at all but could be any conductor of sufficient mechanical strength, e.g., Ti, iron, steel, Al, or appropriate alloys. However, use of such Pb-free core member material is not preferred because of the difficulty of securely bonding the Pb-coating thereto. The bonding difficulty could be reduced by use of an intermediate bond-enhancing layer, e.g., an alloy or compound containing both the core element and Pb. However, even this approach is currently not preferred. The discussion below will be restricted to articles that comprise a Pb-based core member.

The core member material is preferably in the form of continuous sheets or plates and, most preferably, in wound coil configuration for ease of industrial processing. The material will typically have thickness in the range 0.01-1 inch, preferably 0.02-0.2 inches. However, the core member material can also be formed by casting from the melt, as will be discussed below.

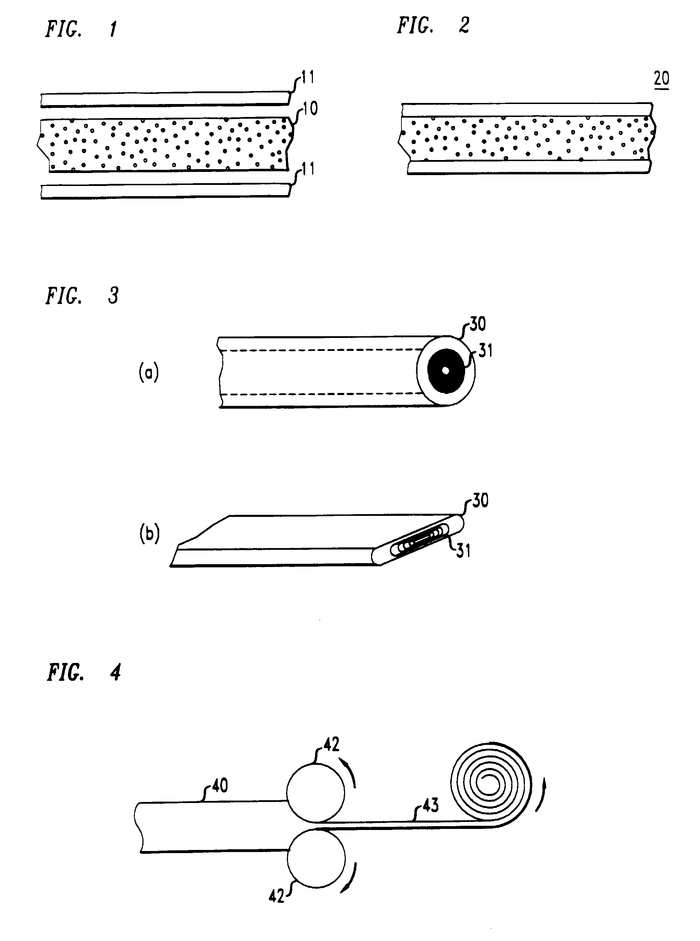

The core member material is substantially enveloped by Pb (preferably of high purity, e.g., at least 98%, preferably 99.5% or better), exemplarily by wrapping Pb sheet around the core member material, as shown schematically in FIG. 1, wherein numerals 10 and 11 refer to the core member material and the Pb sheets, respectively. High purity Pb is desirably used to avoid electrolyte contamination and/or to facilitate grain growth.

Next the Pb sheets are bonded to the core member material, as schematically illustrated in FIG. 2, wherein numeral 20 refers to the Pb-coating/core member/Pb-coating composite. Bonding is typically achieved by means of plastic deformation, e.g., press and roll, or press. Those skilled in the art are familiar with techniques for suitable deformation. They will also appreciate that clean surfaces facilitate bonding.

The plastic deformation should involve at least 20, preferably at least 50 or 75% reduction in cross-sectional area, in order to facilitate attainment of the desired relatively small grain size in the core member and relatively large grain size in the Pb coating.

FIG. 3 a) shows schematically a further exemplary technique of making the desired composite structure. Numeral 31 refers to a coil of core member material, and 30 to a tubular Pb body that surrounds the coil. FIG. 3 b) schematically shows the composite of FIG. 3 a) after plastic deformation, with numerals 30' and 30' referring, respectively, to the Pb coating and the core member.

FIG. 4 schematically illustrates a still further exemplary technique of making the composite structure. A multi-layer stack of core member material 41 is disposed between upper and lower Pb sheets 40, and sent through rolling mill 42, such that bonded composite 43 results.

The relative thickness of Pb coating and core member typically depend on the degree of corrosion resistance desired. For instance, for Pb-acid battery electrode grid structures, the thickness of each coating layer desirably is at least 2%, preferably 5 or even 10% of the thickness of the core member.

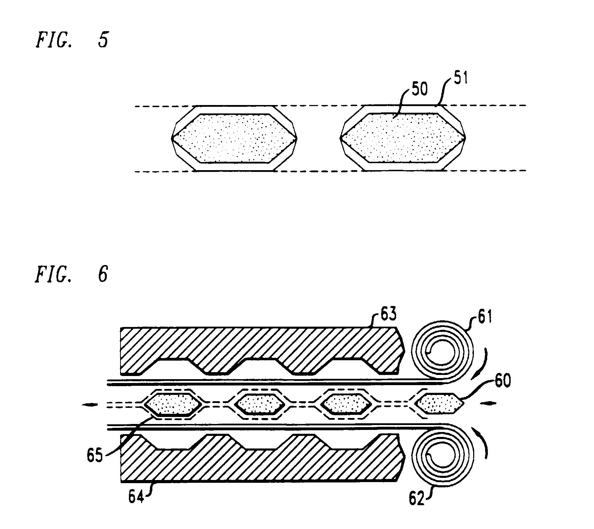

Subsequent to formation of the Pb/core member/Pb composite, the grid electrode structure is formed from the composite. This can be done, for instance, by a conventional mechanical stamping operation, or by any other appropriate technique. FIG. 5 schematically shows a cross-sectional view of a portion of the electrode structure, with numeral 50 referring to the core material, and 51 referring to the Pb surface layer.

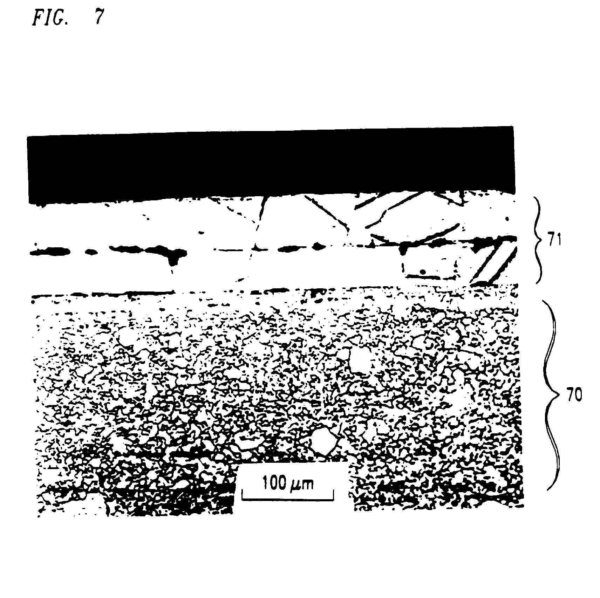

Alternatively, instead of forming the electrode grid structure from the previously made composite, the core member structure can be fed, together with Pb cladding material, to a press for press-welding of the Pb cladding material to the core member structure. This process is schematically illustrated in FIG. 6, wherein numeral 60 refers to the unclad core member structure, numerals 61 and 62 to the Pb cladding sheets, 63 and 64 to upper and lower die, respectively, and 65 refers to the Pb cladding that surrounds the core member structure after the pressing operation. After the pressing operation the required openings are formed in the thus produced structure (e.g., by a conventional stamping operation), and the formation of the electrode grid structure is completed by cutting the clad structure into individual electrode grid structures.

The above described manufacturing sequences are exemplary only, and can be modified in a variety of ways, including combining steps to increase manufacturing speed. All suitable conventional manufacturing processes are contemplated. For instance, the unclad core member structure (corresponding to feature 60 of FIG. 6) can be formed by a process that comprises continuous casting from a melt into a set of solidification dies. By way of example, as-cast Pb-0.5% Sn-0.1% Ca-j0.03% Al exhibited relatively high strength, at least in part due to its fine-grained solidification structure. The thus produced unclad core member structure is then clad with Pb, substantially as described above, and schematically illustrated by FIG. 6.

FIGs. 5 and 6 shows the cross section of the frame and grid of the electrode grid structure to be substantially diamond-like, with included walls. This shape is exemplary, but is advantageous for retention of the active material (e.g., PbO₂). Minor modifications (e.g., rounding of sharp corners) are contemplated.

Those skilled in the art will appreciate that severe plastic deformation of the Pb cladding is desirable in order to maximize grain growth. Since the press welding process of FIG. 6 typically does not lead to severe plastic deformation of the Pb cladding, it may be desirable to either use pre-rolled Pb sheets or to introduce deformation during the stamping operation through die design.

Subsequent to the formation of the electrode grid structure, the structure is subjected to a heat treatment to induce substantial grain growth in the Pb cladding. The grain growth treatment is typically carried out in the range 100 - 300°C, preferably 150-250°C, for a time in the range 0.1-100 hours, preferably 0..2-20 hours. The atmosphere is either inert (e.g., Ar, N₂) or reducing (e.g., H₂ or forming gas), but heat treatment in vacuum is not precluded.

The heat treatment advantageously is carried out such that the average grain size of the Pb cladding is at least 100 µm, preferably 200µm or more, such that the length of grain boundaries in contact with the sulfuric acid is relatively small, resulting in good corrosion resistance.

The process of manufacturing the electrode grid structures is also carried out such that the average grain size of the core member is substantially less than the average grain size of the Pb cladding, with the latter typically being at least four times larger than the former. The relatively small grain size of the core material is required in order to preserve the relatively high mechanical strength of the core material.

FIG. 7 is an optical micrograph that shows the cross-sectional microstructure of a Pb/lead alloy/Pb composite according to the invention. Region 70 is the (relatively fine grained) core member material (Pb-Ca-Sn alloy), and region 71 is the Pb cladding. The difference in average grain size is evident.

Subsequent to the heat treatment, one or more further steps towards completion of the battery are carried out. Exemplary of such steps are: attaching active material to the electrode structure, assembling electrodes in a housing, providing electrical connections, and providing electrolyte.

### Example

A sheet of high purity Pb (- 0.20 mm thick) was wrapped around a plate (1.85 mm thick, 25 mm wide) of lead alloy (99.37% Pb-0.5% Sn-0.1% Ca-0.03% Al; all in weight %). This composite was then pressed and cold rolled to produce about 70% reduction in cross-sectional area, resulting in cold welding and substantial plastic deformation. The resultant strip was then given a differential grain growth heat treatment at -200°C for 16 h in an argon gas atmosphere, resulting in the microstructure shown in FIG. 7. As is evident from the figure, the treatment resulted in a dual-grain-structure, with the Pb cladding having an average grain size (about 200 µm) that is substantially more than 4 times that of the core material (- 18 µm). The large grain size of the Pb cladding results in good corrosion resistance in the battery environment, and the relatively small grain size of the core material results in relatively high strength of the material, making it possible to design relatively light-weight electrode structures, and consequently to make lead acid batteries having relatively high energy density/unit weight The cladding and core material had Vicker's hardness of 5.7 and 7.9, respectively. Desirably, the Vicker's hardness of the core material is at least 30% greater than that of the Pb cladding material.

## Claims

1. An article comprising a Pb-containing member (20),
CHARACTERIZED IN THAT
said member comprises a Pb-containing core member (10) substantially surrounded by a Pb-coating (11) bonded to the core member, the Pb coating having an average grain size that is at least 4 times an average grain size of the core member.

2. Article according to claim 1, wherein the average grain size of the Pb-coating is at least 100 µm.

3. Article according to claim 2, wherein the average grain size of the Pb-coating is at least 200 µm, and the average grain size of the Pb-containing core member is at most 25 µm.

4. Article according to claim 1, wherein a thickness of the Pb-coating is at least 2% of a thickness of the Pb-containing core member.

5. Article according to claim 1, wherein a Vicker's hardness of the Pb-containing core member is at least 30% larger than a Vicker's hardness of the Pb-coating, all measured at room temperature.

6. Article according to claim 1, wherein the Pb-containing core member is selected from the group consisting of the lead alloys and dispersoid-containing Pb, wherein said dispersoid is selected from the group consisting of the inorganic materials that are substantially insoluble in Pb and in sulfuric acid both at 70°C, with the concentration of the sulfuric acid being 45% by weight.

7. Article according to claim 1, wherein the article is a lead-acid battery comprising electrodes, at least one of said electrodes comprising said Pb-containing member, said member providing an electrode grid structure adapted for holding an active material.

8. Method of making an article (20) comprising a Pb-containing member,
CHARACTERIZED IN THAT the method comprises
a) providing a Pb-containing core member (10) substantially surrounded by a Pb-coating (11) bonded to the core member;
b) heat treating the Pb-coated core member such that the Pb-coating has an average grain size that is at least 4 times an average grain size of the core member; and
c) carrying out one or more steps towards completion of the article.

9. Method according to claim 8, wherein step b) comprises heating at a temperature in the range 150 - 250°C for a time in the range 0.2-20 hours.

10. Method according to claim 9, further comprising, prior to step b), mechanically deforming said Pb-coated core member.

11. Method according to claim 8, wherein step a) comprises selecting said Pb-containing core member from the group consisting of the lead alloys and dispersoid-contianing Pb, wherein said dispersoid is selected from the group consisting of the inorganic materials that are substantially insoluble in Pb and in sulfuric acid, both at a temperature of 70°C, with the concentration of the sulfuric acid being 45% by weight

12. Method according to claim 8, wherein the article is a lead-acid battery comprising electrodes, at least one of said electrodes comprising said Pb-containing member, said member providing an electrode grid structure for holding an active material, and step c) comprises attaching said active material to the electrode structure.
